# EUROPEAN PATENT SPECIFICATION

(11) **EP 4 079 541 B1**
(45) Date of publication and mention of the grant of the patent: **01.05.2024**
(21) Application number: 22159908.7
(22) Date of filing: 03.03.2022
(51) Int. Cl.: B60C 11/03

(54) **MOTORCYCLE TIRE**
MOTORRADREIFEN
PNEUMATIQUE DE MOTOCYCLETTE

(30) Priority: 21.04.2021 JP 2021072104
(43) Date of publication of application: 26.10.2022
(73) Proprietor: Sumitomo Rubber Industries, Ltd., Kobe-shi, Hyogo-ken 651-0072 (JP)
(72) Inventor: NOGUCHI, Yoshihisa, Kobe-shi, 651-0072 (JP)
(74) Representative: Manitz Finsterwald Patent- und Rechtsanwaltspartnerschaft mbB

(56) References cited:
- EP-B1- 2 998 130
- JP-A- 2006 076 520
- US-A1- 2019 193 470

## Description

### BACKGROUND OF THE INVENTION

### FIELD OF THE INVENTION

The present invention relates to a motorcycle tire, more particularly to a tread pattern.

### BACKGROUND ART

JP 2019-111973 A discloses a motorcycle tire of which tread portion is provided with first main oblique grooves and second main oblique grooves arranged alternately in the tire circumferential direction and inclined in opposite directions. The tread portion comprises a first region surrounded by one of the first main oblique grooves, one of the second main oblique grooves, and a first tread edge. The first region comprises a plurality of blocks each having a ground-contacting top surface of a polygonal shape whose all internal angles are not less than 45 degrees. Such pneumatic tire is explained as being capable of exhibiting excellent uneven wear resistance while enhancing on-road performance and off-road performance.

US 2019/0193470 A1 discloses a motorcycle tire having a tread with grooves inclined with respect to the circumferential direction, alternately arranged in the circumferential direction and extending in opposite directions. The main grooves enclose, together with one of the tread edges, a region having a trapezoid shape in a top view and consisting of seven blocks.

Further motorcycle tires are disclosed, for example, in EP 2 998 130 B1 or JP 2006-76520 A.

### SUMMARY OF THE INVENTION

### PROBLEMS TO BE SOLVED BY THE INVENTION

The motorcycle tire disclosed in JP 2019-111973 A, however, has room for improvement in transient characteristics and agility when making turning motion on the roads.

The present invention was made in view of the above circumstances, and a primary objective of the present invention is to provide a motorcycle tire capable of improving transient characteristics and agility when making turning motion on the roads, while maintaining off-road performances and uneven wear resistance.

### MEANS FOR SOLVING THE PROBLEMS

According to the present invention, a motorcycle tire comprises:
a tread portion having a first tread edge and a second tread edge and provided with first main oblique grooves and second main oblique grooves, wherein
the first main oblique grooves extend between the first tread edge and the second tread edge, while inclining with respect to the tire circumferential direction to one direction,
the second main oblique grooves extend between the first tread edge and the second tread edge, while inclining with respect to the tire circumferential direction to one direction opposite to the first main oblique grooves,
the first main oblique grooves and the second main oblique grooves are alternately arranged in the tire circumferential direction, and
the first main oblique grooves are connected to the second main oblique grooves, wherein
the tread portion comprises a plurality of substantially triangular first regions each defined as being surrounded by one of the first main oblique grooves, one of the second main oblique grooves, and the first tread edge, and
each of the first regions is divided by sub grooves into blocks which include a largest block whose ground contacting surface has a maximum area A1, and a smallest block whose ground contacting surface has a minimum area A2 which is in a range from 40% to 80% of the maximum area A1.

### EFFECTS OF THE INVENTION

In the motorcycle tire according to the present invention, owing to the above configuration, transient characteristics and agility when making turning motion on the roads are improved, while maintaining off-road performance and uneven wear resistance.

### BRIEF DESCRIPTION OF THE DRAWINGS

FIG. 1 is a cross-sectional view of a motorcycle tire as an embodiment of the present invention.
FIG. 2 is a developed view of the tread portion of the motorcycle tire.
FIGS. 3 and 4 show a first region of the motorcycle tire and are differently provided with reference signs.
FIG. 5 is the same developed view as FIG. 2, which is differently provided with reference signs.

### DETAILED DESCRIPTION OF THE INVENTION

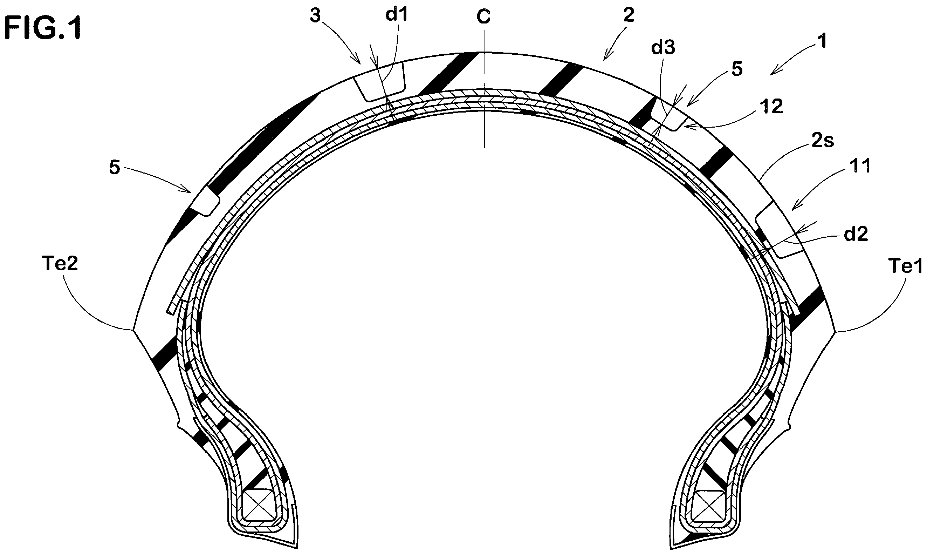

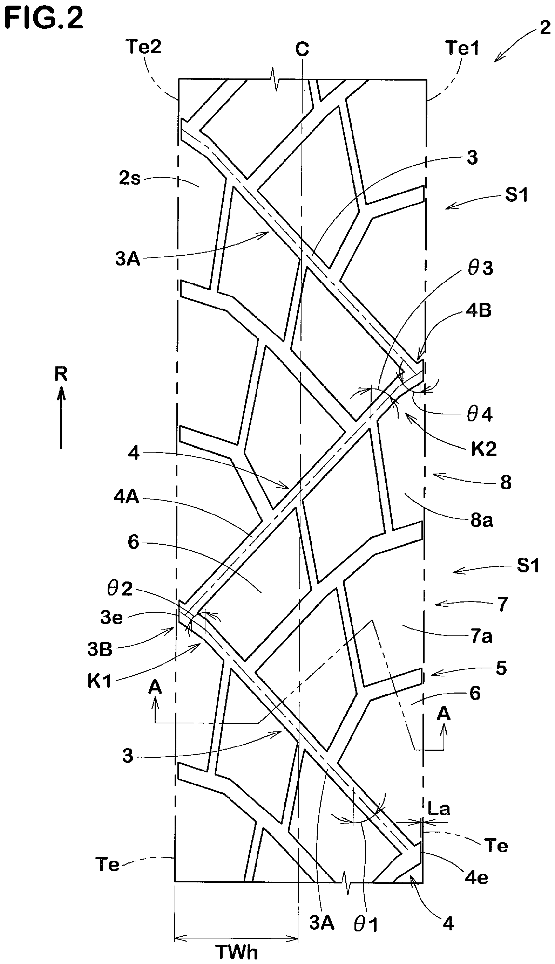

An embodiment of the present invention will now be described in detail in conjunction with accompanying drawings. FIG. 1 is a cross-sectional view of a motorcycle tire 1 as an embodiment of the present invention, taken along line A-A of FIG. 2. In FIG. 1, the tire 1 is under its a normal state.

In the present embodiment, the tire 1 is designed for suitably running on a course including on-road and off-road, by being mounted on the rear wheel of a motorcycle. The tire 1, however, may be used for the front wheel of a motorcycle.

The "normal state" of a tire is such that the tire is mounted on a normal rim (not shown) and inflated to a normal internal pressure, but no tire load is applied to the tire.

In the present application, dimensions, positions and the like relating to the tire 1 refer to those under the normal state unless otherwise noted.

The "normal rim" is a wheel rim specified for the tire by a standard included in a standardization system on which the tire is based, for example, the "normal wheel rim" in JATMA, "Design Rim" in TRA, and "Measuring Rim" in ETRTO.

The "normal internal pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The tire 1 comprises a tread portion 2 having a radially outer surface 2s which is, under the normal state, curved in an arc shape convex toward the outside in the tire radial direction as shown in FIG. 1 in order to secure a sufficient ground contacting area when turning with a large camber angle.

The tread portion 2 has a first tread edge Te1 (right side in the figures) and a second tread edge Te2 (left side in the figures).

The first tread edge Te1 and the second tread edge Te2 correspond to both edges of the tread portion 2 in the tire axial direction, and for example, they may touch the ground when turning with a maximum camber angle.

As shown in FIG. 2, the tread portion 2 is provided with first main oblique grooves 3 and second main oblique grooves 4 each extending between the first tread edge Te1 and the second tread edge Te2.

The first main oblique grooves 3 are inclined with respect to the tire circumferential direction to one direction, and the second main oblique grooves 4 are inclined with respect to the tire circumferential direction to one direction opposite to the first main oblique grooves 3.

The first main oblique grooves 3 and the second main oblique grooves 4 are arranged alternately in the tire circumferential direction and are connected to each other. As a result, the tread portion 2 comprises a plurality of substantially triangular first regions S1 each defined as being surrounded by one of the first main oblique grooves 3, one of the second main oblique grooves 4 and the first tread edge Te1.

Further, each of the first regions S1 is divided by sub grooves 5 into blocks 6. The number of the blocks 6 is preferably in a range from 4 to 8, for example. The blocks 6 include a largest block 7 whose ground contacting top surface 7a has a maximum area A1, and a smallest block 8 whose ground contacting top surface 8a has a minimum area A2.

Here, the minimum area A2 is set in a range from 40% to 80% of the maximum area A1.

By setting the minimum area A2 to be 40% or more of the maximum area A1, differences in rigidity of the blocks 6 in the first region S1 become small. As a result, the transient characteristic and agility from the initial stage to the late stage of on-road turning are improved. Further, the resistance to uneven wear of the blocks in the first region S1 is maintained.

On the other hand, by setting the minimum area A2 to be 80% or less of the maximum area A1, unbalanced deformation occurs in the first region S1 when the blocks 6 are contacting with the ground, which facilitates discharging of mud from the first main oblique groove 3, the second main oblique groove 4 and the sub grooves 5, and thereby, off-road performances is improved.

In this application, the "transient characteristic" refers to the smoothness of leaning the vehicle body from the initial stage to the late stage of turning.

The "agility" refers to the responsiveness of the vehicle body and easiness of changing the camber angle when the rider consciously changes the camber angle (leaning angle of the vehicle body).

Further, the transient characteristic and the agility when initiating turning motion on the road may be comprehensively referred to as "on-road performance".

In the present embodiment, the tire 1 has an intended rotational direction R which is bound by a tread pattern of the tread portion 2.

The present invention is, however, not limited to such a tire for which the tire rotational direction R is specified.

Each of the first main oblique grooves 3 and the second main oblique grooves 4 is terminated without reaching the first tread edge Te1 and the second tread edge Te2 (hereinafter, these tread edges are simply referred to as "tread edges Te").

Such first main oblique grooves 3 and second main oblique grooves 4 suppress the decrease in rigidity of tread edge portions on which a large lateral force acts, and thus may improve the on-road performance.

The distances La in the tire axial direction from first ends 3e of the first main oblique grooves 3 to the adjacent tread edge Te, and the distances La in the tire axial direction from first ends 4e of the second main oblique grooves 4 to the adjacent tread edge Te, are preferably not less than 1 mm, more preferably not less than 2 mm, but preferably not more than 5 mm, more preferably not more than 4 mm.

Here, the first ends 3e and 4e are ends terminated in the outer surface 2s or tread surface of the tread portion 2 without being connected to other grooves.

The first main oblique groove 3 comprises:
a first main inclined portion 3A extending across the tire equator C and inclined at an angle θ1 with respect to the tire circumferential direction; and a first sub inclined portion 3B positioned on the second tread edge Te2 side of the first main inclined portion 3A, and inclined at an angle larger than the angle θ1 with respect to the tire circumferential direction.

In the present embodiment, the first main inclined portion 3A and the first sub inclined portion 3B are connected to each other, forming a bent portion K1 therebetween which is convex toward to one side (upper side in the figure) in the tire circumferential direction.

The second main oblique groove 4 comprises:
a second main inclined portion 4A extending across the tire equator C and inclined at an angle Θ3 with respect to the tire circumferential direction; and a second sub inclined portion 4B positioned on the first tread edge Te1 side of the second main inclined portion 4A, and inclined at an angle larger than the angle Θ3 with respect to the tire circumferential direction.

In the present embodiment, the second main inclined portion 4A and the second sub inclined portion 4B are connected to each other, forming a bent portion K2 therebetween which is convex toward to the above-said one side (upper side in the figure) in the tire circumferential direction.

The first main inclined portion 3A of each first main oblique groove 3 is connected to the second sub inclined portion 4B of one second main oblique groove 4 next to the above-said each first main oblique groove 3 on the other side (lower side in the figure) in the tire circumferential direction. And the second main inclined portion 4A of the above-said one second main oblique groove 4 is connected to the first sub inclined portion 3B of one first main oblique groove 3 next to the above-said one second main oblique groove 4 on the other side (lower side in the figure) in the tire circumferential direction.

Thereby, each of the first main oblique grooves 3 and the second main oblique grooves 4 can secure a large axial length L1. As a result, shearing force of mud is increased to improve off-road performance.

In the present embodiment, as shown in FIG. 2, the first main inclined portion 3A is connected to the second sub inclined portion 4B on the first tread edge Te1 side of the bent portion K2 without being connected to the bent portion K2 of the second main oblique groove 4, and the second main inclined portion 4A is connected to the first sub inclined portion 3B on the second tread edge Te2 side of the bent portion K1 without being connected to the bent portion K1 of the first main oblique groove 3.

The angle θ1 of the first main inclined portions 3A and the angle Θ3 of the second main inclined portions 4A are preferably not less than 30 degrees, more preferably not less than 40 degrees, but preferably not more than 60 degrees, more preferable not more than 50 degrees.

Further, the first sub inclined portions 3B are inclined at an angle θ2 with respect to the tire circumferential direction, and the second sub inclined portions 4B are inclined at an angle θ4 with respect to the tire circumferential direction, wherein the angle θ2 and angle θ4 are preferably not less than 35 degrees, more preferably not less than 45 degrees, more preferably not more than 65 degrees. more preferably not more than 55 degrees.

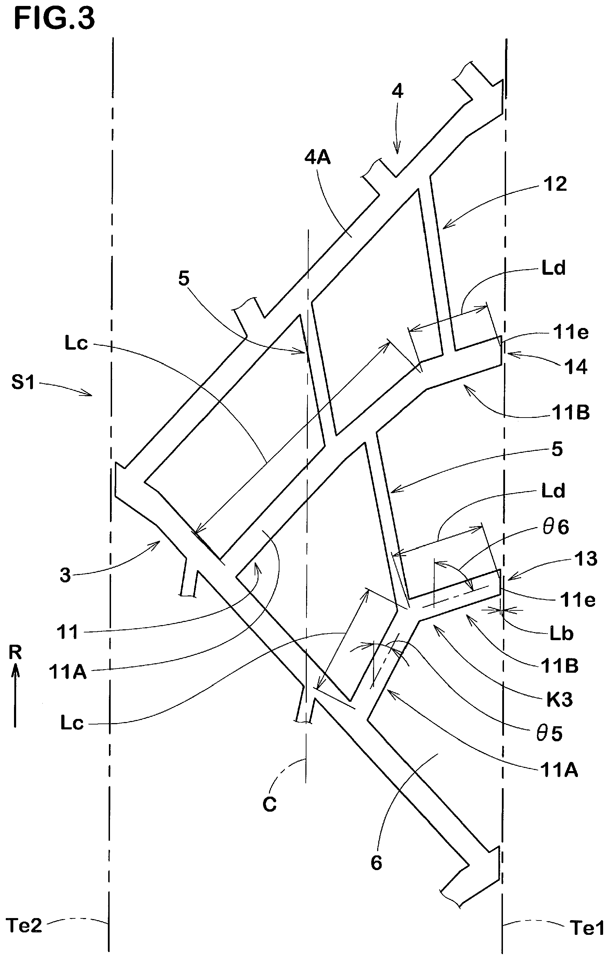

FIG. 3 shows one of the first regions S1 shown in FIG. 2. In the present embodiment, as shown in FIG. 3, the sub grooves 5 are inclined with respect to the tire circumferential direction. Such sub groove 5 has a tire axial component which can exert a shearing force against mud, and thereby off-road performance may be improved.

The sub grooves 5 include a first sub groove 11 extending between the first main oblique groove 3 and the first tread edge Te1, and a second sub groove 12 connected to the first sub groove 11.

The end 11e on the first tread edge Te1 side of the first sub groove 11 is terminated in the tread portion 2, without reaching to the first tread edge Te1. Both ends of the second sub groove 12 are connected to the groove 11 and the groove 11 or 4.

In this application, the term "groove" means a groove whose width is 1.5 mm or more.

It is preferable that the distance Lb in the tire axial direction between the end 11e of the first sub groove 11 and the first tread edge Te1 is the same as the above-mentioned distances La. Namely, the distance Lb is preferably not less than 1 mm, more preferably not less than 2 mm, but more preferably not more than 5 mm, more preferably not more than 4 mm.

The first sub groove 11 comprises:
a first portion 11A connected to the first main oblique groove 3 and inclined at an angle Θ5 with respect to the tire circumferential direction; and
a second portion 11B continued from the first portion 11A and inclined at an angle θ6 larger than the angle Θ5 with respect to the tire circumferential direction. Such first sub groove 11 can maintain the rigidity in the tire axial direction in the vicinity of the first tread edge Te1 on which the lateral force acts.

The first portion 11A and the second portion 11B of the first sub groove 11 are connected to each other, forming a bent portion K3 therebetween which is convex toward the above-said one side in the tire circumferential direction.

The difference (θ6-θ5) between the angle θ6 of the second portion 11B and the angle θ5 of the first portion 11A is preferably not less than 20 degrees, more preferably not less than 25 degrees, but preferably not more than 50 degrees, more preferably not more than 45 degrees.

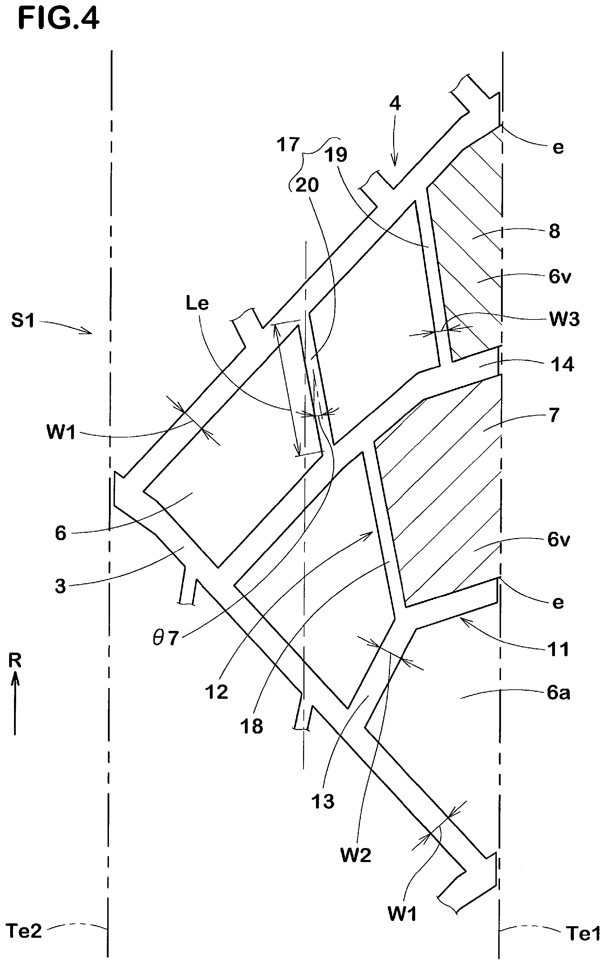

In the present embodiment, as shown in FIG. 4, the first sub groove 11 extending between the first main oblique groove 3 and the first tread edge Te1, includes a short first sub groove 13 having a small axial length, and a long first sub groove 14 having a larger axial length than that of the short first sub groove 13.

In the present embodiment, the long first sub groove 14 is disposed on the second main oblique groove 4 side of the short first sub groove 13.

The first portion 11A of the long first sub groove 14 is inclined at an angle closer to the angle Θ3 of the second main inclined portion 4A than the first portion 11A of the short first sub groove 13.

The first portion 11A extends along the second main inclined portion 4A of the second main oblique groove 4. Here, the expression "extending along" means that the difference between the angle Θ5 of the first portion 11A and the angle Θ3 of the second main inclined portion 4A is 20 degrees or less.

As a result, the difference between the rigidity in the orthogonal direction to the first portion 11A, of the block 6 defined between the second main inclined portion 4A and the first portion 11A, and that of the block 6 defined between the adjacent two first portions 11A, becomes decreased, and uneven wear resistance is improved.

In each first sub groove 11, the length Ld of the second portion 11B is smaller than the length Lc of the first portion 11A. As a result, the traction performance is maintained, and the mud in the first portion 11A is smoothly discharged by utilizing the rotation of the tire 1.

The length Ld of the second portion 11B is preferably not less than 35%, more preferably not less than 40%, but preferably not more than 55%, more preferably not more than 50% of a half developed tread width (TWh shown in FIG. 2).

The half developed tread width TWh is a distance measured along the outer surface 2s of the tread portion 2 from the tire equator C to one of the tread edges Te in the tire axial direction.

Further, the length of the sub groove 5 means the length of the widthwise center line of the sub groove 5.

FIG. 4 shows the same first region S1 as that shown in FIG. 3.

The first main oblique groove 3 and the second main oblique groove 4 have the same groove width W1.

The groove width W2 of each first sub groove 11 is preferably not less than 80%, more preferably not less than 90%, but preferably not more than 120%, more preferably not more than 110% of the groove width W1.

In the present embodiment, the groove width W2 is the same as the groove width W1.

Preferably, the groove width W2 is not less than 10%, more preferably not less than 15%, but preferably not more than 30%, more preferably not more than 25% of the half developed tread width TWh.

In the present embodiment, the second sub groove 12 extends linearly. Such second sub groove 12 suppresses uneven wear occurring in each block 6.

In the present embodiment, the second sub groove 12 includes:
a main-groove-side second sub groove 17 connecting between the second main oblique groove 4 and the long first sub groove 14; and
a sub-groove-side second sub groove 18 connecting between the long first sub groove 14 and the short first sub groove 13.

In the present embodiment, the main-groove-side second sub groove 17 includes: an outer second sub groove 19 located on the first tread edge Te1 side; and an inner second sub groove 20 located on the axially inner side or second tread edge Te2 side of the outer second sub groove 19.

As a result, the first region S1 is divided into six blocks 6.
Specifically, three blocks 6 are formed between the second main oblique groove 4 and the long first sub groove 14,
two blocks 6 are formed between the long first sub groove 14 and the short first sub groove 13, and
one block 6 is formed between the short first sub groove 13 and the first main oblique groove 3.

In the present embodiment, the largest block 7 is defined by the long first sub groove 14, the short first sub groove 13, the sub-groove-side second sub groove 18, and the first tread edge Te1.

In the present embodiment, the smallest block 8 is defined by the second main oblique groove 4, the long first sub groove 14, the outer second sub groove 19, and the first tread edge Te1.

When the first main oblique groove 3, the second main oblique groove 4, and the first sub groove 11 do not reach to the first tread edge Te1 as in the present embodiment, the area of the ground contacting top surface 6a of a block is defined on the assumption that each groove edge, which defines the block and is terminated before the tread edge Te1, extends to the tread edge Te1 at the same angle as that at the terminal end of the groove edge. In other words, for the each groove edge, a virtual groove edge "e" extended in this way is obtained, and using such virtual groove edges, a virtual ground contacting top surface 6v is defined and the area thereof is obtained as the area of the ground contacting top surface 6a of the block.

In FIG. 4, the virtual ground contacting top surface 6v is indicated by hatching for easy reference.

In the present embodiment, the largest block 7 and the smallest block 8 are disposed adjacently to each other in the tire circumferential direction. As a result, unbalanced deformation occurs between the largest block 7 and the smallest block 8 when contacting with the ground, and thereby, off-road performance is improved.

The lengths Le of the second sub grooves 12 are larger than the lengths Ld of the second portions 11B of the first sub grooves 11.

In the present embodiment, each of the lengths Le of the second sub grooves 12 is larger than any of the lengths Ld of the second portions 11B.

Such second sub grooves 12 maintain high rigidity in the tire circumferential direction of the blocks 6 formed by the second sub grooves 12, and improves uneven wear resistance.

In the present embodiment, the groove widths W3 of the second sub grooves 12 are smaller than the groove width W2 of the first sub grooves 11. The groove widths W3 of the second sub grooves 12 are preferably not less than 30%, more preferably not less than 40%, but preferably not more than 80%, more preferably not more than 70% of the groove width W2 of the first sub groove 11. Such second sub grooves 12 maintain block rigidity and enhances uneven wear resistance.

In the present embodiment, the angles Θ7 of the second sub grooves 12 with respect to the tire circumferential direction are smaller than the angles Θ5 (shown in FIG. 3) of the first portions 11A of the first sub grooves 11.

Owing to the relatively small angles Θ7, the mud discharging from the second sub groove 12 is facilitated by the rolling of the tire 1, although the reduced groove width of the second sub groove 12 may deteriorate the mud discharging therefrom. As a result, the block 6 adjacent to the second sub groove 12 is suppressed from being reduced in rigidity, and the uneven wear resistance is improved.

From this point of view, the differences (θ5-θ7) between the angles Θ5 and the angles θ7 are preferably not less than 5 degrees, more preferably not less than 10 degrees, but preferably not more than 25 degrees, more preferably not more than 20 degrees.

The angles θ7 are preferably not less than 5 degrees, more preferably not less than 10 degrees, but preferably not more than 20 degrees, more preferably not more than 15 degrees.

As shown in FIG. 1, the groove depth d3 of the second sub grooves 12 is preferably smaller than the groove depth d2 of the first sub grooves 11. As a result, the above-mentioned action is effectively exerted.

The groove depth d3 of the second sub grooves 12 is preferably not less than 2 mm and preferably not more than 4 mm.

The groove depth d2 of the first sub grooves 11 is preferably not less than 3 mm and preferably not more than 6 mm.

The groove depth d1 of the first main oblique grooves 3 and the second main oblique grooves 4 is preferably larger than the groove depth d3 of the second sub grooves 12. For example, it is preferable that the groove depth d1 is not less than 3 mm and not more than 6 mm.

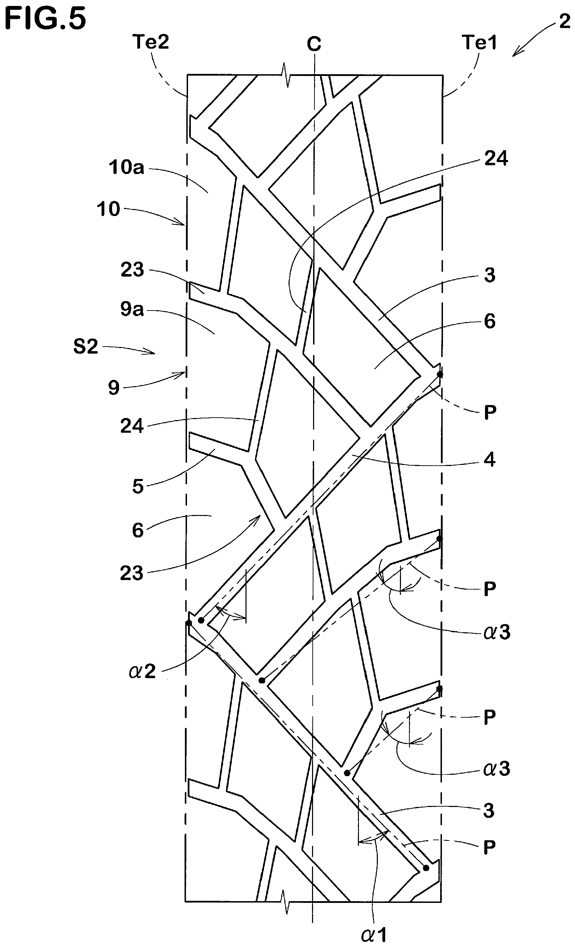

FIG. 5 is the same developed view as FIG. 2 which is provided with reference signs differently from Fig. 2.

As shown, the tread portion 2 comprises a plurality of substantially triangular second regions S2 each defined as being surrounded by one of the first main oblique grooves 3, one of the second main oblique grooves 4, and the second tread edge Te2. Each of the second regions S2 is divided by sub grooves 5 into blocks 6.

The sub grooves 5 in each of the second regions S2 include: third sub grooves 23 extending between the second main oblique groove 4 and the second tread edge Te2; and fourth sub grooves 24 connected to the third sub grooves 23.

In the present embodiment, the third sub grooves 23 have the same configurations as the first sub grooves 11, therefore, detailed descriptions thereof will be omitted.

In the present embodiment, the fourth sub grooves 24 have the same configurations as the second sub grooves 12, therefore, detailed descriptions thereof will be omitted.

Further, the blocks 6 in the second region S2 formed by the third sub grooves 23 and the fourth sub grooves 24 has the same configurations as the blocks 6 in the first region S1.

The blocks 6 include: a largest block 9 of which ground contacting top surface 9a has a maximum area A1'; and a smallest block 10 of which ground contacting top surface 10a has a minimum area A2', wherein the minimum area A2' is preferably in a range from 40% to 80% of the maximum area A1'.

In the present embodiment, the largest block 9 has the same shape as (or inverted symmetrical shape to) the largest block 7 in the first region S1.

In the present embodiment, the smallest block 10 has the same shape as (or inverted symmetrical shape to) the smallest block 8 in the first region S1.

In the present embodiment, the second region S2 is the same as the first region S1 except for the groove arrangement in the second region S2 which is symmetrical to the groove arrangement in the second region S1 about the tire equator C.

It is preferable that a nominal angle α1 of the first main oblique grooves 3, a nominal angle α2 of the second main oblique grooves 4, and nominal angles α3 of the first and third sub grooves 11 and 23 are set to be not less than 40 degrees with respect to the tire circumferential direction so that the grooves 3, 4 and 11 exhibit great traction.

Here, the nominal angle (α1, α2, α3) of a groove (3, 4, 11, 23) means the angle of a straight line P drawn between both ends of the widthwise center line of the groove.

While detailed description has been made of a preferable embodiment of the present invention, the present invention can be embodied in various forms as claimed without being limited to the illustrated embodiment.

### Comparison tests

Motorcycle tires having the internal structure shown in FIG. 1 and tread patterns based on the tread pattern shown in FIG. 2, were experimentally manufactured as test tires (Comparative example tires Ref.1 and Ref.2 and Working example tires Ex.1 - Ex.6) and tested for the on-road performance, off-road performance and uneven wear resistance.

The specifications of the test tires are shown in Table 1.

### < On-road performance, off-road performance, and uneven wear resistance tests >

The test tires were mounted on wheel rims and attached to a test vehicle (500cc motorcycle).
Tire size (front, rear): (120/70R17, 160/60R17)
Rim size (front, rear): (3.50x17, 4.50x17)
Tire internal pressure (both wheels): 250 kPa

Then, the test vehicle was run on a test course including a dry asphalt road and muddy ground by a test rider.

On-road performance regarding the transient characteristic and agility during running on the dry asphalt road, was evaluated into ten ranks by the test rider. Off-road performance regarding the traction when running on the muddy ground and stability during turning, was evaluated into ten ranks by the test rider.

After the on-road performance test, the uneven wear resistance was evaluated visually into ten ranks by the test rider based on the state of occurrence of uneven wear.

The test results are shown in Table 1.

**Table 1**

| tire | Ref.1 | Ref.2 | Ex.1 | Ex.2 | Ex.3 | Ex.4 | Ex.5 | Ex. 6 |
|---|---|---|---|---|---|---|---|---|
| A2/A1 (%) | 30 | 85 | 50 | 40 | 80 | 50 | 50 | 60 |
| W1/TWh, W2/TWh (%) | 8 | 12 | 12 | 12 | 12 | 12 | 15 | 15 |
| W3/W2 (%) | 100 | 80 | 80 | 80 | 80 | 50 | 50 | 50 |
| α1,α2 (degree) | 45 | 45 | 45 | 45 | 45 | 45 | 45 | 45 |
| number of blocks in first region | 7 | 6 | 6 | 6 | 6 | 6 | 6 | 6 |
| depth d1, d2 (mm) | 4.5 | 4.5 | 4.5 | 4.5 | 4.5 | 4.5 | 4.5 | 4.5 |
| depth d3 (mm) | 3 | 3 | 3 | 3 | 3 | 3 | 3 | 3 |
| on-road performance | 5 | 6.5 | 6.5 | 6.5 | 6.5 | 7 | 7 | 8 |
| off-road performance | 5 | 2.5 | 7 | 5 | 5 | 7 | 8 | 8 |
| uneven wear resistance | 5 | 6.5 | 7 | 5.5 | 6 | 8 | 8 | 8 |

From the test results, it was confirmed that, as compared with the comparative example tires, the tires according to the present invention were improved in the transient characteristic and agility, while maintaining the off-road performance and uneven wear resistance.

### DESCRIPTION OF THE REFERENCE SIGNS

- 1: motorcycle tire
- 2: tread portion
- 3: first main oblique groove
- 4: second main oblique groove
- 5: sub groove
- 6: block
- 7: largest block
- 7a: ground contacting surface
- 8: smallest block
- 8a: ground contacting surface
- S1: first region
- Te1: first tread edge

## Claims

1. A motorcycle tire (1) comprising:
a tread portion (2) having a first tread edge (Te1) and a second tread edge (Te2) and provided with first main oblique grooves (3) and second main oblique grooves (4),
wherein
the first main oblique grooves (3) extend between the first tread edge (Te1) and the second tread edge (Te2), while inclining with respect to the tire circumferential direction to one direction,
the second main oblique grooves (4) extend between the first tread edge (Te1) and the second tread edge (Te2), while inclining with respect to the tire circumferential direction to one direction opposite to the first main oblique grooves (3),
the first main oblique grooves (3) and the second main oblique grooves (4) are alternately arranged in the tire circumferential direction, and
the first main oblique grooves (3) are connected to the second main oblique grooves (4),
**characterized in that** the tread portion (2) comprises a plurality of substantially triangular first regions (S1) each defined as being surrounded by one of the first main oblique grooves (3), one of the second main oblique grooves (4), and the first tread edge (Te 1), and
each of the first regions (S1) is divided by sub grooves (5) into blocks (6) which include a largest block (7) whose ground contacting surface (7a) has a maximum area A1, and a smallest block (8) whose ground contacting surface (8a) has a minimum area A2 which is in a range from 40% to 80% of the maximum area A1.

2. The motorcycle tire (1) according to claim 1, wherein
the sub groove (5) includes a first sub groove (11) extending between the first main oblique groove (3) and the first tread edge (Te1), and a second sub groove (12) connected to the first sub groove (11).

3. The motorcycle tire (1) according to claim 2, wherein
the groove width (W3) of the second sub groove (12) is smaller than the groove width (W2) of the first sub groove (11).

4. The motorcycle tire (1) according to claim 2 or 3, wherein
the groove depth (d3) of the second sub groove (12) is smaller than the groove depth (d2) of the first sub groove (11).

5. The motorcycle tire (1) according to any one of claims 2 to 4, wherein
the first sub groove (11) comprises
a first portion (11A) connected to the first main oblique groove (3) and inclined at an angle (θ5) with respect to the tire circumferential direction, and a second portion (11B) connected to the first portion (11A) and inclined at an angle (θ6) larger than that of the first portion (11A) with respect to the tire circumferential direction, and the length (Ld) of the second portion (11B) is smaller than the length (Lc) of the first portion (11A).

6. The motorcycle tire (1) according to claim 5, wherein
the length (Le) of the second sub groove (12) is larger than the length (Ld) of the second portion (11B).

7. The motorcycle tire (1) according to any one of claims 2 to 6, wherein
the angles of the first main oblique groove (3), the second main oblique groove (4) and the first sub groove (11) are not less than 40 degrees with respect to the tire circumferential direction.

8. The motorcycle tire (1) according to any one of claims 1 to 7, wherein
the first main oblique groove (3) comprises:
a first main inclined portion (3A) extending across the tire equator (C) and inclined at an angle (θ1) with respect to the tire circumferential direction: and a first sub inclined portion (3B) positioned on the second tread edge side of the first main inclined portion (3A), and inclined at an angle larger than that of the first main inclined portion (3A) with respect to the tire circumferential direction,
the second main oblique groove (4) comprises:
a second main inclined portion (4A) extending across the tire equator (C) and inclined at an angle (θ3) with respect to the tire circumferential direction: and a second sub inclined portion (4B) positioned on the first tread edge side of the second main inclined portion (4A), and inclined at an angle larger than that of the second main inclined portion (4A) with respect to the tire circumferential direction, and
the first main inclined portion (3A) is connected to the second sub inclined portion (4B).

9. The motorcycle tire (1) according to claim 8, wherein
the second main inclined portion (4A) is connected to the first sub inclined portion (3B).

10. The motorcycle tire (1) according to any one of claims 1 to 9, wherein
the first main oblique groove (3) and the second main oblique groove (4) are terminated without reaching any of the first tread edge (Te1) and the second tread edge (Te2).

11. The motorcycle tire (1) according to any one of claims 1 to 10, wherein
the largest block (7) and the smallest block (8) are adjacent to each other in the tire circumferential direction.

12. The motorcycle tire (1) according to any one of claims 1 to 10, wherein
the tread portion (2) comprises a plurality of substantially triangular second regions (S2) each defined as being surrounded by one of the first main oblique grooves (3), one of the second main oblique grooves (4), and the second tread edge (Te2), and
each of the second regions (S2) is divided by sub grooves (5) into blocks (6) which include a largest block (9) whose ground contacting surface (9a) has a maximum area A1', and a smallest block (10) whose ground contacting surface (10a) has a minimum area A2' in a range from 40% to 80% of the maximum area A1'.

## Patentansprüche

1. Motorradreifen (1), umfassend:
einen Laufflächenabschnitt (2), der eine erste Laufflächenkante (Te1) und eine zweite Laufflächenkante (Te2) aufweist und mit ersten schrägen Hauptrillen (3) und zweiten schrägen Hauptrillen (4) versehen ist,
wobei
die ersten schrägen Hauptrillen (3) sich zwischen der ersten Laufflächenkante (Te1) und der zweiten Laufflächenkante (Te2) erstrecken, während sie in Bezug auf die Reifenumfangsrichtung in eine Richtung geneigt sind,
die zweiten schrägen Hauptrillen (4) sich zwischen der ersten Laufflächenkante (Te1) und der zweiten Laufflächenkante (Te2) erstrecken, während sie in Bezug auf die Reifenumfangsrichtung in eine Richtung entgegengesetzt zu den ersten schrägen Hauptrillen (3) geneigt sind,
die ersten schrägen Hauptrillen (3) und die zweiten schrägen Hauptrillen (4) abwechselnd in der Reifenumfangsrichtung angeordnet sind, und
die ersten schrägen Hauptrillen (3) mit den zweiten schrägen Hauptrillen (4) verbunden sind,
**dadurch gekennzeichnet, dass** der Laufflächenabschnitt (2) eine Vielzahl von im Wesentlichen dreieckigen ersten Bereichen (S1) umfasst, die jeweils so definiert sind, dass sie von einer der ersten schrägen Hauptrillen (3), einer der zweiten schrägen Hauptrillen (4) und der ersten Laufflächenkante (Te1) umgeben sind, und
jeder der ersten Bereiche (S1) durch Unterrillen (5) in Blöcke (6) unterteilt ist, die einen größten Block (7), dessen Bodenkontaktfläche (7a) eine maximale Fläche A1 aufweist, und einen kleinsten Block (8), dessen Bodenkontaktfläche (8a) eine minimale Fläche A2 aufweist, die in einem Bereich von 40 % bis 80 % der maximalen Fläche A1 liegt, umfassen.

2. Motorradreifen (1) nach Anspruch 1, wobei die Unterrille (5) eine erste Unterrille (11), die sich zwischen der ersten schrägen Hauptrille (3) und der ersten Laufflächenkante (Te1) erstreckt, und eine zweite Unterrille (12), die mit der ersten Unterrille (11) verbunden ist, umfassen.

3. Motorradreifen (1) nach Anspruch 2, wobei die Rillenbreite (W3) der zweiten Unterrille (12) kleiner als die Rillenbreite (W2) der ersten Unterrille (11) ist.

4. Motorradreifen (1) nach Anspruch 2 oder 3, wobei die Rillentiefe (d3) der zweiten Unterrille (12) kleiner als die Rillentiefe (d2) der ersten Unterrille (11) ist.

5. Motorradreifen (1) nach einem der Ansprüche 2 bis 4,
wobei die erste Unterrille (11) umfasst
einen ersten Abschnitt (11A), der mit der ersten schrägen Hauptrille (3) verbunden ist und unter einem Winkel (θ5) in Bezug auf die Reifenumfangsrichtung geneigt ist, und
einen zweiten Abschnitt (11B), der mit dem ersten Abschnitt (11A) verbunden ist und unter einem Winkel (θ6) größer als der des ersten Abschnitts (11A) in Bezug auf die Reifenumfangsrichtung geneigt ist, und die Länge (Ld) des zweiten Abschnitts (11B) kleiner als die Länge (Lc) des ersten Abschnitts (11A) ist.

6. Motorradreifen (1) nach Anspruch 5, wobei die Länge (Le) der zweiten Unterrille (12) größer als die Länge (Ld) des zweiten Abschnitts (11B) ist.

7. Motorradreifen (1) nach einem der Ansprüche 2 bis 6, wobei die Winkel der ersten schrägen Hauptrille (3), der zweiten schrägen Hauptrille (4) und der ersten Unterrille (11) in Bezug auf die Reifenumfangsrichtung nicht kleiner als 40 Grad sind.

8. Motorradreifen (1) nach einem der Ansprüche 1 bis 7, wobei
die erste schräge Hauptrille (3) umfasst:
einen ersten geneigten Hauptabschnitt (3A), der sich über den Reifenäquator (C) erstreckt und unter einem Winkel (θ1) in Bezug auf die Reifenumfangsrichtung geneigt ist; und
einen ersten geneigten Unterabschnitt (3B), der auf der Seite der zweiten Laufflächenkante des ersten geneigten Hauptabschnitts (3A) positioniert ist und unter einem Winkel größer als der des ersten geneigten Hauptabschnitts (3A) in Bezug auf die Reifenumfangsrichtung geneigt ist,
die zweite schräge Hauptrille (4) umfasst:
einen zweiten geneigten Hauptabschnitt (4A), der sich über den Reifenäquator (C) erstreckt und in einem Winkel (θ3) in Bezug auf die Reifenumfangsrichtung geneigt ist; und
einen zweiten geneigten Unterabschnitt (4B), der auf der Seite der ersten Laufflächenkante des zweiten geneigten Hauptabschnitts (4A) positioniert ist und unter einem Winkel größer als der des zweiten geneigten Hauptabschnitts (4A) in Bezug auf die Reifenumfangsrichtung geneigt ist, und
der erste geneigte Hauptabschnitt (3A) mit dem zweiten geneigten Unterabschnitt (4B) verbunden ist.

9. Motorradreifen (1) nach Anspruch 8, wobei der zweite geneigte Hauptabschnitt (4A) mit dem ersten geneigten Unterabschnitt (3B) verbunden ist.

10. Motorradreifen (1) nach einem der Ansprüche 1 bis 9, wobei die erste schräge Hauptrille (3) und die zweite schräge Hauptrille (4) enden, ohne eine der ersten Laufflächenkante (Te1) und der zweiten Laufflächenkante (Te2) zu erreichen.

11. Motorradreifen (1) nach einem der Ansprüche 1 bis 10, wobei der größte Block (7) und der kleinste Block (8) in der Reifenumfangsrichtung zueinander benachbart sind.

12. Motorradreifen (1) nach einem der Ansprüche 1 bis 10, wobei
der Laufflächenabschnitt (2) eine Vielzahl von im Wesentlichen dreieckigen zweiten Bereichen (S2) umfasst, die jeweils so definiert sind, dass sie von einer der ersten schrägen Hauptrillen (3), einer der zweiten schrägen Hauptrillen (4) und der zweiten Laufflächenkante (Te2) umgeben sind, und
jeder der zweiten Bereiche (S2) durch Unterrillen (5) in Blöcke (6) unterteilt ist, die einen größten Block (9), dessen Bodenkontaktfläche (9a) eine maximale Fläche A1' aufweist, und einen kleinsten Block (10), dessen Bodenkontaktfläche (10a) eine minimale Fläche A2' in einem Bereich von 40 % bis 80 % der maximalen Fläche A1' aufweist, umfassen.

## Revendications

1. Pneumatique pour motocyclette (1) comprenant :
une portion formant bande de roulement (2) ayant un premier bord de bande de roulement (Te1) et un second bord de bande de roulement (Te2) et qui est dotée de premières rainures obliques principales (3) et de secondes rainures obliques principales (4),
dans lequel
les premières rainures obliques principales (3) s'étendent entre le premier bord de bande de roulement (Te1) et le second bord de bande de roulement (Te2), tout en s'inclinant par rapport à la direction circonférentielle du pneumatique vers une direction,
les secondes rainures obliques principales (4) s'étendent entre le premier bord de bande de roulement (Te1) et le second bord de bande de roulement (Te2), tout en s'inclinant par rapport à la direction circonférentielle du pneumatique vers une direction opposée aux premières rainures obliques principales (3),
les premières rainures obliques principales (3) et les secondes rainures obliques principales (4) sont agencées en alternance dans la direction circonférentielle du pneumatique, et
les premières rainures obliques principales (3) sont connectées aux secondes rainures obliques principales (4),
**caractérisé en ce que** la portion formant bande de roulement (2) comprend une pluralité de premières régions sensiblement triangulaires (S1) définies chacune comme étant entourées un élément parmi les premières rainures obliques principales (3), les secondes rainures obliques principales (4), et le premier bord de bande de roulement (Te1), et
chacune des premières régions (S1) est divisée par des rainures auxiliaires (5) en blocs (6) qui incluent un bloc le plus grand (7) dont une surface de contact au sol (7a) a une aire maximum A1, et un bloc le plus petit (8) dont une surface de contact au sol (8a) a une aire minimum A2 qui est dans une plage allant de 40 % à 80 % de l'aire maximum A1.

2. Pneumatique pour motocyclette (1) selon la revendication 1, dans lequel la rainure auxiliaire (5) inclut une première rainure auxiliaire (11) s'étendant entre la première rainure oblique principale (3) et le premier bord de bande de roulement (Te1), et une seconde rainure auxiliaire (12) connectée à la première rainure auxiliaire (11).

3. Pneumatique pour motocyclette (1) selon la revendication 2, dans lequel la largeur de rainure (W3) de la seconde rainure auxiliaire (12) est plus petite que la largeur de rainure (W2) de la première rainure auxiliaire (11).

4. Pneumatique pour motocyclette (1) selon la revendication 2 ou 3, dans lequel
la profondeur de rainure (d3) de la seconde rainure auxiliaire (12) est plus petite que la profondeur de rainure (d2) de la première rainure auxiliaire (11).

5. Pneumatique pour motocyclette (1) selon l'une quelconque des revendications 2 à 4, dans lequel
la première rainure auxiliaire (11) comprend
une première portion (11A) connectée à la première rainure oblique principale (3) et inclinée sous un angle (θ5) par rapport à la direction circonférentielle du pneumatique, et
une seconde portion (11B) connectée à la première portion (11A) et inclinée sous un angle (θ6) plus grand que celui de la première portion (11A) par rapport à la direction circonférentielle du pneumatique, et la longueur (Ld) de la seconde portion (11B) est plus petite que la longueur (Lc) de la première portion (11A).

6. Pneumatique pour motocyclette (1) selon la revendication 5, dans lequel la longueur (Le) de la seconde rainure auxiliaire (12) est plus grande que la longueur (Ld) de la seconde portion (11B).

7. Pneumatique pour motocyclette (1) selon l'une quelconque des revendications 2 à 6, dans lequel
les angles de la première rainure oblique principale (3), de la seconde rainure oblique principale (4) et de la première rainure auxiliaire (11) ne sont pas inférieurs à 40 degrés par rapport à la direction circonférentielle du pneumatique.

8. Pneumatique pour motocyclette (1) selon l'une quelconque des revendications 1 à 7, dans lequel
la première rainure oblique (3) comprend :
une première portion inclinée principale (3A) s'étendant à travers l'équateur de pneumatique (C) et inclinée sous un angle (θ1) par rapport à la direction circonférentielle du pneumatique ; et
une première portion inclinée auxiliaire (3B) positionnée sur le côté du second bord de bande de roulement de la première portion inclinée principale (3A), et inclinée sous un angle plus grand que celui de la première portion inclinée principale (3A) par rapport à la direction circonférentielle du pneumatique,
la seconde rainure oblique principale (4) comprend :
une seconde portion inclinée principale (4A) s'étendant à travers l'équateur de pneumatique (C) et inclinée sous un angle (θ3) par rapport à la direction circonférentielle du pneumatique ; et
une seconde portion inclinée auxiliaire (4B) positionnée sur le côté du premier bord de bande de roulement de la seconde portion inclinée principale (4A), et inclinée sous un angle plus grand que celui de la seconde portion inclinée principale (4A) par rapport à la direction circonférentielle du pneumatique, et
la première portion inclinée principale (3A) connectée à la seconde portion inclinée auxiliaire (4B).

9. Pneumatique pour motocyclette (1) selon la revendication 8, dans lequel la seconde portion inclinée principale (4A) est connectée à la première portion inclinée auxiliaire (3B).

10. Pneumatique pour motocyclette (1) selon l'une quelconque des revendications 1 à 9, dans lequel
la première rainure oblique principale (3) et la seconde rainure oblique principale (4) se terminent sans atteindre aucun du premier bord de bande de roulement (Te1) et du second bord de bande de roulement (Te2).

11. Pneumatique pour motocyclette (1) selon l'une quelconque des revendications 1 à 10, dans lequel
le bloc le plus grand (7) et le bloc le plus petit (8) sont adjacents l'un à l'autre dans la direction circonférentielle du pneumatique.

12. Pneumatique pour motocyclette (1) selon l'une quelconque des revendications 1 à 10, dans lequel
la portion formant bande de roulement (2) comprend une pluralité de secondes régions sensiblement triangulaires (S2) définies chacune comme étant entourées par un élément parmi les premières rainures obliques principales (3), les secondes rainures obliques principales (4), et le second bord de bande de roulement (Te2), et
chacune des secondes régions (S2) est divisée par des rainures auxiliaires (5) en blocs (6) qui incluent un bloc le plus grand (9) dont une surface de contact au sol (9a) a une aire maximum A1', et un bloc le plus petit (10) dont une surface de contact au sol (10a) a une aire minimum A2' dans une plage allant de 40 % à 80 % de l'aire maximum A1'.
